# EUROPEAN PATENT SPECIFICATION

(11) **EP 1 843 837 B1**
(45) Date of publication and mention of the grant of the patent: **27.05.2009**
(21) Application number: 06706423.8
(22) Date of filing: 26.01.2006
(51) Int. Cl.: B01J 19/00

(54) **LAYERED CERAMIC MICROREACTOR HAVING AT LEAST THREE INTERIOR SPACES AND BUFFERS**
AUS SCHICHTEN AUFGEBAUTER KERAMISCHER MIKROREAKTOR MIT MINDESTENS DREI INNENRÄUMEN SOWIE STROMSTÖRERN
MICROREACTEUR CERAMIQUE FORME DE COUCHES ET POSSEDANT AU MOINS TROIS ESPACES INTERIEURS ET MUNI DES DEFLECTEURS

(30) Priority: 28.01.2005 DE 102005004075
(43) Date of publication of application: 17.10.2007
(73) Proprietor: Umicore AG & Co. KG, 63457 Hanau-Wolfgang (DE)
(72) Inventor: SCHMITT, Carsten, 58093 Hagen (DE); AGAR, David, 44229 Dortmund (DE); PLATTE, Frank, 44147 Dortmund (DE); PAWLOWSKI, Beate, 07743 Jena (DE); ROTHE, Peter, 07620 Hermsdorf (DE); REITZ, Hans-Georg, 63589 Linsengericht (DE); DUISBERG, Matthias, 60599 Frankfurt (DE)
(74) Representative: Starz, Karl Anton
(86) International application number: PCT/EP2006/000675
(87) International publication number: WO 2006/079532

(56) References cited:
- EP-A- 1 568 412
- EP-A- 1 637 222
- WO-A-01/41931
- WO-A-20/06036193
- US-A1- 2003 194 362
- US-A1- 2004 228 781
- US-A1- 2005 165 121
- US-A1- 2005 176 832
- US-A1- 2005 272 965

## Description

The invention relates to a microreactor composed of an inert ceramic material. The ceramic microreactor has a multilayered structure and has at least three interior spaces. The invention further relates to a process for carrying out reactions having a large heat of reaction, in particular heterogeneously catalyzed gas-phase reactions, in the microreactor of the invention, and also its use.

The ceramic microreactor of the invention has at least seven layers and is used for reactions having a large heat of reaction, in particular heterogeneously catalyzed gas-phase reactions. Owing to the good heat exchange due to the special arrangement of the interior spaces in the reactor, these reactions proceed within a narrow temperature window (i.e. isothermally) and thus selectively and in high yield.

The microreactor described is used, for example, for hydrogen production and hydrogen purification in fuel cell technology and can, owing to its compact dimensions, readily be integrated into fuel cell systems. However, other fields of use, e.g. in microtechnology, medicine or the chemical industry, are also conceivable.

Ceramic microreactors are known from the technical literature. Compared to metallic reactors, they have cost advantages, a lower weight and better resistance to corrosive media. Furthermore, catalytic coatings on ceramic reactors display better adhesion properties.

D. Goehring and R. Knitter report a process for producing ceramic microreactors, in which reactor constructions such as gas diffusion structures having channels which have a width of about 500 microns (µm) can be realized (D. Goehring, R. Knitter, "Rapid Manufacturing keramischer Mikroreaktoren", Keramische Zeitschrift 53, 2001, (6), pages 480-484). The modular system used does not offer the opportunity of simultaneous heating/cooling by means of heat transfer media. The structure is not a ceramic monolith and problems in sealing of the system therefore occur. Due to the different shrinkage of the ceramic used, the modules have to be subjected to final machining and be matched to one another. They can be used only in the particular combination.

Sandwich assemblies and functional components made of sintered aluminium oxide ceramic and specific green ceramic sheets as intermediate layer are likewise known from the literature, cf. M. Neuhaeuser, S. Spauszus, G. Koehler and U. Stoeßel, "Fuegen von Technischen Keramiken mittels Keramik-Gruenfolien", Ceramic Forum International cfi/Ber. DKG 72 (1995), number 1-2, pp. 17-20. This article describes multilayer ceramic heat exchangers containing green ceramic sheets composed of metal oxides and metal oxide compounds. Such compounds can have a considerable adverse effect on heterogeneous gas-phase reactions and are therefore unsuitable for use in ceramic reactors.

Channel-shaped laminated ceramic microreactors are described by the Pacific Northwest National Laboratory (PNNL); cf. P.M. Martin, D.W. Matson, W.D. Bennett, D.C., Stewart and C.C. Bouham, "Laminated ceramic microfluidic components for microreactor applications", Proceedings IMRET 4 Conference, Atlanta, 5-9 March 2000. In this study, microreactors having simple structures, for example microreactors having serpentine channels, are realized by lamination of green ceramic sheets.

Monolithic ceramic honeycombs which have a large number of channels and are produced by an extrusion process are known from automobile exhaust catalysis (cf. Degussa Edelmetalltaschenbuch, 2nd Edition, Hüthig-Verlag, Heidelberg, 1995, p. 361ff.). However, such monoliths are open at both ends and do not have separate interior spaces (reaction or heating/cooling spaces).

WO 03/088390 A2 describes a ceramic reactor for use as combustion or reforming reactor. It has a single reaction space which can be coated with catalyst.

US-A-2004/0228781 relates to an apparatus comprising at least one process microchannel having at least one fin projecting into the process microchannel from the base wall and extending along at least part of the length of the channel and a catalyst or sorption medium supported by the fin.

It was therefore an object of the present invention to provide a ceramic microreactor which has a plurality of separate interior spaces and is suitable for carrying out reactions having a large heat of reaction, in particular heterogeneously catalyzed gas-phase reactions. The various heating/cooling and reaction spaces should be in direct contact with one another and make it possible for the reaction to be carried out isothermally as a result of rapid heat transfer. The interior space should be optimized in terms of fluid dynamics so that homogeneous, uniform flow of the reaction medium or heat transfer medium through the space is ensured.

This object is achieved by provision of the inventive ceramic microreactor according to Claims 1 to 7. In the further Claims 8 to 10, a process for carrying out reactions having a large heat of reaction with the aid of the microreactor of the invention is described and its use is described in Claims 11 and 12.

The invention provides a ceramic microreactor for carrying out reactions having a large heat of reaction which comprises at least three interior spaces, with at least one interior space having internal buffers whose shape, number and positioning ensure homogeneous flow.

The at least three interior spaces include at least one upper heating/cooling space, at least one central reaction space and at least one lower heating/cooling space. The ceramic microreactor is built up as a monolith from seven plate-shaped layers of inert ceramic material, with all interior spaces having internal buffers.

The at least three interior spaces of the ceramic microreactor can be arranged or operated in cross-current, in countercurrent or in cocurrent flow.

Furthermore, at least one interior space has one or more catalysts which are suitable for catalyzing reactions having a large heat of reaction. The central reaction space preferably has a catalyst.

The construction by means of lamination of green ceramic sheets produces monolithic microreactors having at least three interior spaces. The use of seven sheets produces, for example, a monolithic structure having three interior spaces; if nine sheets are used, reactors having four interior spaces are obtained.

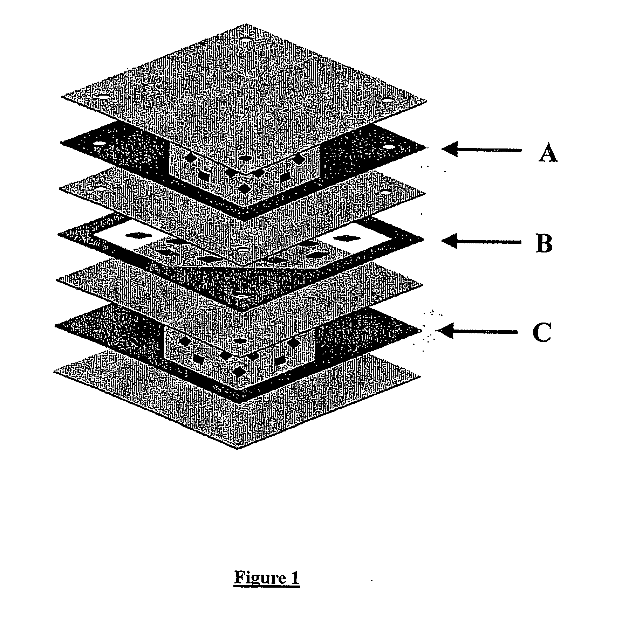

**Figure 1** shows the schematic structure of a monolithic seven-layer microreactor. The middle interior space (B) serves as reaction space. A catalyst which catalyzes reactions having a large heat of reaction, for example heterogeneous gas-phase reactions, is applied to the walls of the reaction space. Above and below the reaction space (B) are the heating/cooling spaces (A) and (C) which regulate the temperature in the reaction space (B) by means of heat transfer media. As a result of this heating/cooling, the reaction is carried out isothermally, i.e. within a narrow temperature window. Local overheating is avoided. Introduction and discharge of the reactants into/from the reaction space (B) and introduction and discharge of the heat transfer media into/from the heating/cooling spaces (A) and (C) are achieved via the recesses or passages which are in each case positioned in the corners of the microreactor (cf. **Figure 1**).

The flow of the media within an interior space (A), (B) or (C) is defined by means of a design which has been optimized in terms of fluid dynamics. The arrangement of the buffers (the "internal buffers") is determined by means of simulation calculations (computational fluid dynamics, CFD) so that they ensure homogeneous flow through the interior space as a result of their shape, number and positioning.

The software program "FEATflow" (FEAT = "finite element analysis tool") used for the simulation calculations is a research code for the steady-state and non-steady-state solution of the incompressible Navier-Stokes equation for general 2D and 3D geometries. The software package is based on stabilized FEM and multigrid techniques and makes it possible to analyze a field for the purposes of parallelization. As a result, the program offers the necessary precision, efficiency and robustness for the present very distorted geometries.

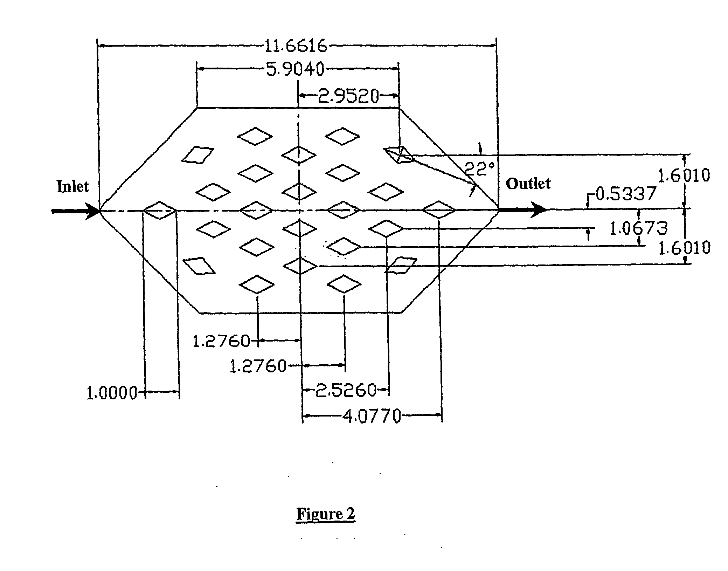

An example of the configuration of an interior space of the microreactor of the invention which has been optimized in terms of fluid dynamics is shown in **Figure 2****.** The dimensions shown are in cm, and inlet and outlet for the introduction and discharge of the reactants or the heat transfer medium are indicated.

The internal buffers have triangular, quadrilateral, square, rectangular, hexagonal, lozenge-shaped, trapezoidal or circular horizontal projections and are arranged at a distance of from 0.3 to 10 cm, preferably a distance of from 0.5 to 5 cm, from one another. The buffers preferably have a lozenge shape, with the dimensions of the lozenge being about 1 x 0.5 cm (in each case the diagonals). The lozenges can be arranged with their main diagonal parallel to the longitudinal axis of the microreactor or at a particular angle thereto. The angle between lozenge main diagonal and reactor longitudinal axis is in the range from 5° to 90°, preferably in the range from 5° to 45° and particularly preferably in the range from 15 to 30°.

In addition, the positioning of the buffers at the indicated spacings prevents, due to structural mechanics, flexing of the sheets during the sintering process.

The green ceramic sheets required for constructing the microreactor are made of the same material; they preferably comprise aluminium oxide. They are cut in the green state, subsequently laminated and sintered. The casting of the sheets is known from conventional ceramics processing. The green sheets are produced by the doctor blade method. In a first step, a castable slip comprising the material to be cast, dispersants, binders, plasticizers and solvents is prepared. This slip is, after dispersion and subsequent homogenization, introduced into a casting box and cast via a doctor blade onto a moving casting substrate. The sheet produced in this way is subsequently dried.

The sealing of the porous ceramic on the outside is effected by coating with glass solder (for example with a commercially available dielectric paste). A gastight, monolithic ceramic body is thus formed.

The interior wall of the reaction spaces is coated with catalyst, preferably with one or more catalysts comprising noble metals. However, pulverulent or pelletized supported catalysts can also be used for filling the interior space.

Selective CO methanization, for example, requires an Ru-containing catalyst, while Rh-containing catalysts are used for autothermal reforming. Noble metals used are platinum (Pt), palladium (Pd), rhodium (Rh), ruthenium (Ru), gold (Au), iridium (Ir), osmium (Os) or silver (Ag) and/or their alloys and/or their mixtures with base metals. Coating of the interior wall of the reaction spaces can, for example, be effected by filling with a ceramic slip containing noble metal (washcoat). Catalyst layers displaying good adhesion are obtained by means of a subsequent sintering process at temperatures of from 400 to 800°C for from about 1 to 3 hours.

This production process, which is suitable for mass production, provides an inexpensive alternative to the microreactors obtainable hitherto.

The microreactor of the invention makes it possible to set a narrow temperature window for reactions having a large heat of reaction. The selectivity and yield of such reactions is significantly increased as a result. Reactions having a large heat of reaction are ones which proceed either strongly exothermically or strongly endothermically. In general, the reaction having a large heat of reaction is carried out in the temperature range from 200 to 1000°C. As heat transfer media, use is made of, for example, air, water, thermo-oils or heat transfer fluids. The microreactor of the invention is preferably used for carrying out heterogeneously catalyzed gas-phase reactions. Examples are selective CO methanization, CO oxidation, steam reforming, autothermal reforming or catalytic combustion. Such reactions are frequently required for producing and/or purifying hydrogen-containing gases in fuel cell technology. Starting materials (feedstocks) for these reactions can be hydrocarbons, petroleum spirit, aromatics, alcohols, ester compounds, synthesis gases, CO-containing reformer gases or hydrogen-containing gas mixtures.

The ceramic microreactor of the invention gives very good results in the selective methanization of CO in hydrogen-containing reformer products used as fuel gases for fuel cells.

The following example illustrates the construction and mode of operation of the ceramic microreactor of the invention.

### EXAMPLE

A seven-layer ceramic microreactor is constructed from seven green aluminium oxide sheets (type F 800, manufactured by Inocermic GmbH, D-07629 Hermsdorf/Thueringen). The dimensions of the sheets as received are 12 x 12 cm, and their thickness is 1 mm. A microreactor having three interior spaces (upper heating/cooling space, reaction space, lower heating/cooling space) is created by means of the seven-layer construction. The sheets as received are cut to size in the green state and the passages for inlet and outlet are provided. For the sheets of the two heating/cooling spaces and for the sheet of the reaction space, the interior material is in each case cut out and removed. The internal buffers for the heating/cooling spaces and the reaction space are positioned in the green state on the respective underlying sheet so that they are located in the positions which have been optimized beforehand by means of flow simulation (CFD, FEAT-flow software). The 24 internal buffers have a lozenge shape (dimensions about 1 x 0.5 cm, measured as diagonals) and are positioned relative to one another in the previously calculated pattern.

The two heating/cooling spaces and the reaction space are arranged relative to one another according to the cross-flow principle.

After construction of the seven-layer structure, the assembly is laminated by means of a specific lamination solution and the binder is subsequently removed and the structure is sintered at 1675°C for about 2 hours. After the firing process, the porous ceramic is sealed on the outside by means of a coating of glass solder (type IP 9117S, from Heraeus, D-63450 Hanau); firing temperature: 850°C.

The interior surfaces of the reaction space are then coated with a catalyst comprising noble metal. A catalyst for selective CO methanization (2% by weight of Ru on TiO₂/Al₂O₃) is used and is applied by filling with a ceramic slip containing noble metal (washcoat). Sintering of the catalyst coating is carried out at 500°C for 3 hours.

### Test results

The seven-layer microreactor is provided with connections for the reaction media (starting materials and products) and also cooling media and used for selective CO methanization. When operated using CO-containing reformer gas at 260°C, the CO content of the product gas is significantly reduced. The initial CO concentration in the reformer gas was 5000 ppm, and the final concentration was 668 ppm. This corresponds to a conversion of 87% and demonstrates the effectiveness of the microreactor of the invention.

## Claims

1. Ceramic microreactor for carrying out reactions having a large heat of reaction, **characterized in that** it has at least three interior spaces and at least one interior space has internal buffers whose shape, number and positioning ensure homogeneous flow and that the at least three interior spaces include at least one upper heating/cooling space, at least one central reaction space and at least one lower heating/cooling space and that the ceramic microreactor is built up as a monolith from at least seven layers of inert ceramic material and that at least one interior space has at least one catalyst and that the internal buffers in an interior space have triangular, quadrilateral, square, rectangular, hexagonal, lozenge-shaped, trapezoidal or circular horizontal projections.

2. Ceramic microreactor according to Claim 1,
**characterized in that** the at least three interior spaces are arranged in cross-current, in countercurrent or in cocurrent.

3. Ceramic microreactor according to any of Claims 1 or 2,
**characterized in that** the catalyst comprises at least one noble metal from the group consisting of platinum (Pt), palladium (Pd), rhodium (Rh), ruthenium (Ru), gold (Au), iridium (Ir), osmium (Os), silver (Ag) and/or their alloys and/or their mixtures with base metals.

4. Ceramic microreactor according to any of Claims 1 to 3,
**characterized in that** the outer surface is coated with glass solder.

5. Ceramic microreactor according to any of Claims 1 to 4,
**characterized in that** the shape, number and positioning of the internal buffers in an interior space is determined with the aid of flow simulation calculations.

6. Ceramic microreactor according to any of Claims 1 to 5,
**characterized in that** the buffers are arranged at a distance of from 0.3 to 10 cm, preferably a distance of from 0.5 to 5 cm, from one another.

7. Ceramic microreactor according to any of Claims 1 to 6,
**characterized in that** the internal buffers are lozenge-shaped and have dimensions of about 1 x 0.5 cm (in each case the diagonals).

8. Process for carrying out a reaction having a large heat of reaction using a ceramic microreactor according to any of Claims 1 to 7, which comprises the steps
a) introduction of a feed mixture into at least one interior space,
b) heating/cooling of the reaction having a large heat of reaction by introduction and discharge of heat transfer media,
c) discharge of a product mixture from the at least one reaction space.

9. Process according to Claim 8, wherein the reaction having a large heat of reaction is a heterogeneously catalyzed gas-phase reaction, for example a selective CO methanization, a CO oxidation, a steam reforming reaction, an autothermal reforming reaction or a catalytic combustion.

10. Process according to Claim 9, wherein the reaction having a large heat of reaction proceeds in the temperature range from 200 to 1000°C, and air, water, thermo-oils or heat transfer fluids are used as heat transfer media.

11. Use of the ceramic microreactor according to any of Claims 1 to 7 for hydrogen production and/or hydrogen purification for fuel cells.

12. Use of the ceramic microreactor according to any of Claims 1 to 7 in microtechnology, medicine or the chemical industry.

## Patentansprüche

1. Keramischer Mikroreaktor zum Ausführen von Reaktionen mit großer Reaktionswärme, **dadurch gekennzeichnet, daß** er mindestens drei Innenräume besitzt und mindestens ein Innenraum interne Puffer aufweist, deren Gestalt, Anzahl und Positionierung eine homogene Strömung sicherstellen, und daß die mindestens drei Innenräume mindestens einen oberen Erwärmungs-/Abkühlraum, mindestens einen zentralen Reaktionsraum und mindestens einen unteren Erwärmungs-/Abkühlraum enthalten und daß der keramische Mikroreaktor als ein Monolith aus mindestens sieben Schichten aus inertem Keramikmaterial aufgebaut ist und daß mindestens ein Innenraum mindestens einen Katalysator besitzt und daß die internen Puffer in einem Innenraum dreieckige, vierseitige, quadratische, rechteckige, hexagonale, rautenförmige, trapezförmige oder kreisförmige horizontale Projektionen besitzen.

2. Keramischer Mikroreaktor nach Anspruch 1, **dadurch gekennzeichnet, daß** die mindestens drei Innenräume im Querstromprinzip, im Gegenstromprinzip oder im Gleichstromprinzip angeordnet sind.

3. Keramischer Mikroreaktor nach einem der Ansprüche 1 oder 2, **dadurch gekennzeichnet, daß** der Katalysator mindestens ein Edelmetall aus der Gruppe bestehend aus Platin (Pt), Palladium (Pd), Rhodium (Rh), Ruthenium (Ru), Gold (Au), Iridium (Ir), Osmium (Os), Silber (Ag) und/oder ihren Legierungen und/oder ihren Mischungen mit Basismetallen umfaßt.

4. Keramischer Mikroreaktor nach einem der Ansprüche 1 bis 3, **dadurch gekennzeichnet, daß** die äußere Oberfläche mit Glaslot beschichtet ist.

5. Keramischer Mikroreaktor nach einem der Ansprüche 1 bis 4, **dadurch gekennzeichnet, daß** die Gestalt, Anzahl und Positionierung der internen Puffer in einem Innenraum mit Hilfe von Strömungssimulationsberechnungen bestimmt wird.

6. Keramischer Mikroreaktor nach einem der Ansprüche 1 bis 5, **dadurch gekennzeichnet, daß** die Puffer in einem Abstand von 0,3 bis 10 cm, bevorzugt einem Abstand von 0,5 bis 5 cm, voneinander angeordnet sind.

7. Keramischer Mikroreaktor nach einem der Ansprüche 1 bis 6, **dadurch gekennzeichnet, daß** die internen Puffer rautenförmig sind und Abmessungen von etwa 1 x 0,5 cm (in jedem Fall die Diagonalen) aufweisen.

8. Prozeß zum Ausführen einer Reaktion mit einer großen Reaktionswärme unter Verwendung eines keramischen Mikroreaktors nach einem der Ansprüche 1 bis 7, der die folgenden Schritte umfaßt
a) Einleitung einer Beschickungsmischung in mindestens einen Innenraum,
b) Erwärmen/Abkühlen der Reaktion mit einer großen Reaktionswärme durch Einleiten und Austragen von Wärmetransfermedien,
c) Austragen einer Produktmischung aus dem mindestens einen Reaktionsraum.

9. Prozeß nach Anspruch 8, wobei die Reaktion mit einer großen Reaktionswärme eine heterogen katalysierte Gasphasenreaktion ist, beispielsweise eine selektive CO-Methanisierung, eine CO-Oxidation, eine Dampfreformierungsreaktion, eine autothermische Reformierungsreaktion oder eine katalytische Verbrennung.

10. Prozeß nach Anspruch 9, wobei die Reaktion mit einer großen Reaktionswärme im Temperaturbereich von 200 bis 1000°C abläuft und Luft, Wasser, Thermoöle oder Wärmetransferfluide als Wärmetransfermedien verwendet werden.

11. Verwendung des keramischen Mikroreaktors nach einem der Ansprüche 1 bis 7 zur Wasserstoffherstellung und/oder Wasserstoffreinigung für Brennstoffzellen.

12. Verwendung des keramischen Mikroreaktors nach einem der Ansprüche 1 bis 7 in der Mikrotechnologie, der Medizin oder der chemischen Industrie.

## Revendications

1. Microréacteur céramique pour réaliser des réactions ayant une chaleur de réaction élevée, **caractérisé en ce qu'**il comporte au moins trois espaces intérieurs et au moins un espace intérieur comporte des déflecteurs internes dont la forme, le nombre et le positionnement garantissent un écoulement homogène, **en ce que** les au moins trois espaces intérieurs comprennent au moins un espace supérieur de chauffage/refroidissement, au moins un espace central de réaction et au moins un espace inférieur de chauffage/refroidissement, **en ce que** le microréacteur céramique est construit comme un monolithe à partir d'au moins sept couches de matériau céramique inerte, **en ce qu'**au moins un espace intérieur comporte au moins un catalyseur, et **en ce que** les déflecteurs internes dans un espace intérieur comportent des saillies horizontales triangulaires, quadrilatérales, carrées, rectangulaires, hexagonales, en forme de losange, trapézoïdales ou circulaires.

2. Microréacteur céramique selon la revendication 1, **caractérisé en ce que** les au moins trois espaces intérieurs sont disposés en courants croisés, à contre-courant ou en courants parallèles.

3. Microréacteur céramique selon l'une quelconque des revendications 1 et 2, **caractérisé en ce que** le catalyseur comprend au moins un métal noble du groupe constitué par le platine (Pt), le palladium (Pd), le rhodium (Rh), le ruthénium (Ru), l'or (Au), l'iridium (Ir), l'osmium (Os), l'argent (Ag) et/ou leurs alliages et/ou leurs mélanges avec des métaux de base.

4. Microréacteur céramique selon l'une quelconque des revendications 1 à 3, **caractérisé en ce que** la surface externe est recouverte de verre de scellement.

5. Microréacteur céramique selon l'une quelconque des revendications 1 à 4, **caractérisé en ce que** la forme, le nombre et le positionnement des déflecteurs internes dans un espace intérieur sont déterminés à l'aide de calculs de simulation d'écoulement.

6. Microréacteur céramique selon l'une quelconque des revendications 1 à 5, **caractérisé en ce que** les déflecteurs sont disposés les uns par rapport aux autres à une distance de 0,3 à 10 cm, de préférence une distance de 0,5 à 5 cm.

7. Microréacteur céramique selon l'une quelconque des revendications 1 à 6, **caractérisé en ce que** les déflecteurs internes sont en forme de losange et ont des dimensions d'environ 1 x 0,5 cm (dans chaque cas les diagonales).

8. Procédé pour réaliser une réaction ayant une chaleur de réaction élevée en utilisant un microréacteur céramique selon l'une quelconque des revendications 1 à 7, qui comprend les étapes suivantes :
a) introduction d'un mélange de charges dans au moins un espace intérieur,
b) chauffage/refroidissement de la réaction ayant une chaleur de réaction élevée par introduction et évacuation d'un milieu de transfert de chaleur,
c) décharge d'un mélange de produits depuis le au moins un espace de réaction.

9. Procédé selon la revendication 8, dans lequel la réaction ayant une chaleur de réaction élevée est une réaction en phase gazeuse à catalyse hétérogène, par exemple une méthanisation sélective de CO, une oxydation de CO, une réaction de vaporeformage, une réaction de reformage autotherme ou une combustion catalytique.

10. Procédé selon la revendication 9, dans lequel la réaction ayant une chaleur de réaction élevée se déroule dans la plage de température de 200 à 1000°C, et de l'air, de l'eau, des huiles thermiques ou des fluides de transfert de chaleur sont utilisés comme milieu de transfert de chaleur.

11. Utilisation du microréacteur céramique selon l'une quelconque des revendications 1 à 7 pour la production d'hydrogène et/ou la purification d'hydrogène pour des piles à combustible.

12. Utilisation du microréacteur céramique selon l'une quelconque des revendications 1 à 7 dans les microtechnologies, en médecine ou dans l'industrie chimique.
